(19) Europäisches Patentamt

European Patent Office

Office européen des brevets

(11) **EP 4 095 640 B1**

(12) **EUROPEAN PATENT SPECIFICATION**

(45) Date of publication and mention
of the grant of the patent:
**22.01.2025 Bulletin 2025/04**

(21) Application number: **21175955.0**

(22) Date of filing: **26.05.2021**

(51) International Patent Classification (IPC):
*G05D 1/00* (2024.01)     *G08G 1/00* (2006.01)
*G06Q 10/08* (2024.01)

(52) Cooperative Patent Classification (CPC):
**G08G 1/202; G05D 1/0297**

(54) **METHOD AND SYSTEM FOR CONTROLLING A PLURALITY OF VEHICLES, IN PARTICULAR AUTONOMOUS VEHICLES**

VERFAHREN UND SYSTEM ZUR STEUERUNG EINER VIELZAHL VON FAHRZEUGEN, INSBESONDERE VON AUTONOMEN FAHRZEUGEN

PROCÉDÉ ET SYSTÈME DE COMMANDE D'UNE PLURALITÉ DE VÉHICULES, EN PARTICULIER DES VÉHICULES AUTONOMES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.11.2022 Bulletin 2022/48**

(73) Proprietor: **Volvo Autonomous Solutions AB
405 08 Göteborg (SE)**

(72) Inventor: **HELLGREN, Jonas
413 16 GÖTEBORG (SE)**

(74) Representative: **Kransell & Wennborg KB
P.O. Box 2096
403 12 Göteborg (SE)**

(56) References cited:
**WO-A2-2015/011661     US-A1- 2020 247 611**

Processed by Luminess, 75001 PARIS (FR)

# Description

## TECHNICAL FIELD

The present disclosure relates to the field of centralized vehicle control, and in particular to methods and devices allowing centralized control of a scalable number of vehicles using limited computational resources.

## BACKGROUND

Motion planning for multiple vehicles is discussed in US20200247611A1, which discloses an object-handling coordination system with a plurality of transporting vessels arranged as a three-dimensional cluster. Motion planning is performed by evaluating possible future states, where each state corresponds to the contemporaneous positions of all transporting vessels. More precisely, US20200247611A1 executes a method for planning the movement of the transport vessels, comprising the steps of:

    1. initializing a counter c = 1 (search tree depth),

    2. generating a plurality of potential subsequent states with respect to counter c using a search tree,

    3. using a constraint checker to retain only "viable" subsequent states,

    4. incrementing the counter c, and

    5. repeating steps 2-4 until a preset maximum search tree depth $c_{max}$ has been reached.

In the search tree thus generated, the most preferable sequence of states is found and executed.

In relation to US20200247611A1, one problem is to spend a preset computational budget more efficiently.

WO2015011661A2 discloses a traffic planning method with the technical features of the preamble of claim 1.

## SUMMARY

An objective of the present disclosure is to make available methods and devices for centrally controlling a scalable number of vehicles. The methods and devices should preferably be suitable for the control of autonomous vehicles. It is a particular objective to propose vehicle control techniques that optimize the use of a predefined computational budget. A still further objective is to support the evaluation of potential vehicle trajectories represented as a tree-like structure.

At least some of these objectives are achieved by the invention as defined by the independent claims.

The dependent claims relate to advantageous embodiments of the invention.

In a first aspect of the invention, there is provided a traffic planning method with the technical features of claim 1.

The background reference US20200247611A1 applies a preset maximum search tree depth $c_{max}$ and therefore fails to leverage the fact that a maximum-depth search tree may still leave some of the computational resources unused if many states are not "viable". Thanks to the preliminary steps introduced above, where nonfeasible motion commands are eliminated, the first aspect of the invention can achieve a higher efficiency in this regard. The scalability of the number of vehicles may improve too, as the resulting method is able to suggest a suitable search depth reduction that offsets the increase in computational burden when more vehicles are deployed.

In the terminology of the present disclosure, a "planning node" may refer to a resource which is shared among the vehicles, such as a waypoint or a road segment.

A motion command may be described as "feasible" if it is directed to a movable vehicle (i.e., not in an absorption state) and it does not lead the vehicle system into a deadlock or terminal state. A motion command may also be nonfeasible if it is excluded on the basis if control heuristics, e.g., to remove vehicles as soon as possible from positions where they may later become blocking, such as single-lane road segments. In particular, the step of determining the mean number of feasible motion commands in a neighborhood of the initial node occupancies may comprise processing the initial node occupancies to identify vehicles which are temporarily non-movable. Alternatively or additionally, this step may comprise comparing the initial node occupancies with a set of deadlock patterns; the deadlock patterns may include both deadlock states and other states which lead into deadlock states. Either one of these options constitutes a systematic and automatable approach to finding the mean number of feasible motion commands.

A "neighborhood" of the initial node occupancies may be expressed as a predefined search depth $d_0$. Normally, the predefined search depth $d_0$ is significantly less than typical values of the search depth $d$. A search tree for this neighborhood is generated by evolving the vehicle system according to all possible commands up to the $d_0^{th}$ epoch, and the mean number of feasible motion commands is computed.

A "computational budget" corresponds to the maximum number $L_{max}$ of leaves which a search tree may include. In this case, the search depth $d$ is calculated by applying the mean number of feasible motion commands as a mean branching factor $\overline{b}$ of the search tree.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

The method within the first aspect of the invention is useful for autonomous, semi-autonomous or driver-operated vehicles. An example use case may be a fleet of fully autonomous vehicles. Another example use case is a fleet of public-transport or industrial vehicles which are operated by human drivers but routed in real time by a central planning entity. Determining routing instructions to vehicles is one example of tactical decision-making. In the context of the present disclosure, a tactical decision for a vehicle may have a validity time of the order of 1 s, 10 s, 100 s or even more. A search depth of $d$ units may therefore correspond to a planning horizon of $d$ s, $10d$ s, $100d$ s or more. The method within the first aspect may be applied to a fleet of 2-10 vehicles, a fleet of the order of 10 vehicles, 100 vehicles, 1000 vehicles or more. In at least some of these numerical ranges, the first aspect is computationally advantageous over the prior art.

It is noted that the solving of the planning problem does not necessarily rely on a tree search. Rather, the solver to be used for the planning problem can be chosen freely in view of the intended use case. It is foreseen in some embodiments to use machine-learning, such as Q-learning approaches.

In a second aspect of the invention, a device for performing the method of claim 1 is provided. The device includes first and second interfaces and processing circuitry. The first interface is configured to receive initial node occupancies of the vehicles. This is given as input data to the motion planning. Further input data to the motion planning may define a mission (utility task) to be carried out may by the vehicles and/or it may define, for each vehicle, a set of predefined commands and predefined motion constraints. The second interface is configured to feed commands selected from said predefined commands - the output of the motion planning - to said plurality of vehicles. The processing circuitry is configured to perform the steps of the method of claim 1.

On a general level, the second aspect shares the advantages of the first aspect, and it can be implemented with a corresponding degree of technical variation.

The invention further relates to a computer program containing instructions for causing a computer to carry out the method of claim 1. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

## BRIEF DESCRIPTION OF THE DRAWINGS

Aspects and embodiments are now described, by way of example, with reference to the accompanying drawings, on which:

figure 1 is a flowchart of a traffic planning method;

figure 2 shows a device suitable for controlling a plurality of vehicles;

figure 3 is a schematical representation of a road network with numbered waypoints;

figure 4 shows example vehicles that can be controlled centrally using embodiments of the invention;

figure 5 is a search tree representing possible sequences of commands to the vehicles; and

figure 6 are outlines in semilogarithmic scale of two example search trees illustrating the significance of the notation $d$, $d_0$.

## DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

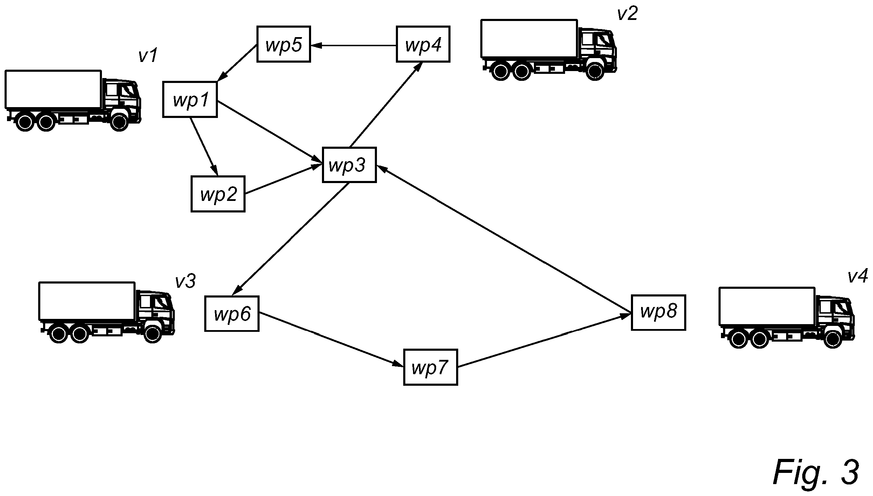

Figure 3 is a schematic representation of a road network. Waypoints are defined at the road junctions wp1, wp3 and additionally at some intermediate locations wp2, wp4, wp5, ..., wp8. Some of the intermediate locations may correspond to so-called absorption nodes, where a visiting vehicle is required to dwell for a predetermined or variable time, for purposes of loading, unloading, maintenance etc. The arrangement of the waypoints is not essential to the present invention, rather their location and number may be chosen as deemed necessary in each use case to achieve smooth and efficient traffic control. The waypoints are treated as planning nodes which are shared by a plurality of vehicles v1, v2, v3, v4. Abstractly, a planning node may be understood as a logical entity which is either free or occupied by exactly one vehicle at a time. An occupied node is not consumed but can be released for use by the same or another vehicle. Planning nodes may represent physical space for transport or parking, a communication channel, maintenance machinery, additional equipment for optional temporary use, such as tools or trailers.

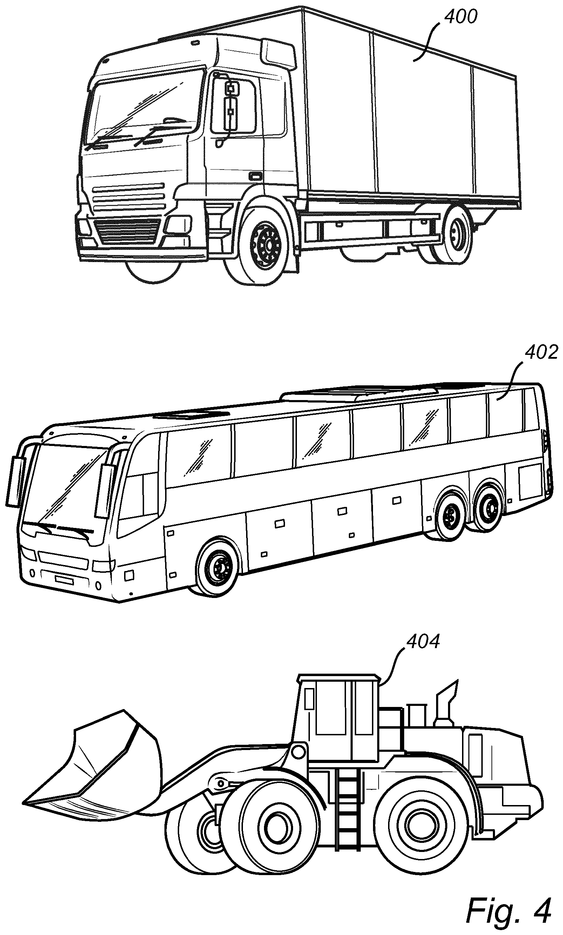

Each vehicle (see figure 4) is controllable by an individual control signal, which may indicate a command from a finite set of predetermined commands. It is understood that individual control signals may be multiplexed onto a common carrier. A predefined command may represent an action to be taken at the next waypoint (e.g., continue straight, continue right, continue left, stop), a next destination, a speed adjustment, a loading operation or the like. Implicit signaling is possible, in that a command has a different meaning depending on its current state (e.g., toggle between an electric engine and a combustion engne, toggle between high and low speed, drive/wait at the next waypoint). A vehicle which receives no control signal or a neutrally-valued control signal may be configured to continue the previously instructed action or to halt. The predetermined commands preferably relate to tactical decision-making, which corresponds to a time scale typically shorter than strategic decision-making and typically longer than operational (or machinelevel) decision-making. Different vehicles may have different sets of commands.

One aim of the present disclosure is to enable efficient centralized control of the vehicles v1, v2, v3, v4. The vehicles v1, v2, v3, v4 are to be controlled as a group, with mutual coordination. The mutual coordination may entail that any planning node utilization conflicts that could arise between vehicles are deferred to a planning algorithm and resolved at the planning stage. The planning may aim to maximize productivity, such as the total quantity of useful transport system work or the percentage of on-schedule deliveries of goods. The planning may additionally aim to minimize cost, including fuel consumption, battery wear, mechanical component wear or the like.

Regarding the planning node utilization conflicts that may arise, it may initially be noted that no vehicle blocks any other vehicle for the node occupancies (start state) shown in figure 3, that is

$$O\begin{pmatrix} v1 \\ v2 \\ v3 \\ v4 \end{pmatrix} = \begin{pmatrix} wp1 \\ wp4 \\ wp6 \\ wp8 \end{pmatrix}.$$

It can also be seen that these node occupancies provide each vehicle with a next waypoint to which it can move in a next epoch. The choice is not arbitrary, however, as both vehicles v1 and v4 may theoretically move to waypoint wp3, but this conflict can be avoided by routing vehicle v1 to waypoint wp2 instead. If the system is evolved in this manner, that is

$$O\begin{pmatrix} v1 \\ v2 \\ v3 \\ v4 \end{pmatrix} = \begin{pmatrix} wp2 \\ wp5 \\ wp7 \\ wp3 \end{pmatrix},$$

then vehicle v4 will block vehicle v1 from moving. This blocking state temporarily reduces the vehicle system's productivity but will be resolved once vehicle v4 continues to waypoint wp4.

It is easy to realize that the difficulty of the blocking states (as measured, say, by the number of vehicle movements needed to reach a non-blocking state) in a given waypoint topology will increase with the number of vehicles present. The efficiency gain of deploying many vehicles may therefore be offset by the increased risk of conflicts. A waypoint topology populated with many vehicles may also include deadlock states, where no vehicle movement is possible. This may correspond to a real-life scenario where the controlled vehicles need external help to resume operation, such as operator intervention, towing etc.

The following description is made under an assumption of discrete time, that is, the traffic system evolves in evenly spaced epochs. The length of an epoch may be of the order of 0.1 s, 1 s, 10 s or longer. At each epoch, either a command a1, a2 is given to one of the vehicles v1, v2, v3, v4, a command is given to a predefined group of vehicles, or no command is given. Quasi-simultaneous commands v1.a1, v2.a1 to two vehicles v1, v2 or two vehicle groups can be distributed over two consecutive epochs. To allow approximate simultaneity, the epoch length may be configured shorter than the typical time scale of the tactical decision-making for one vehicle.

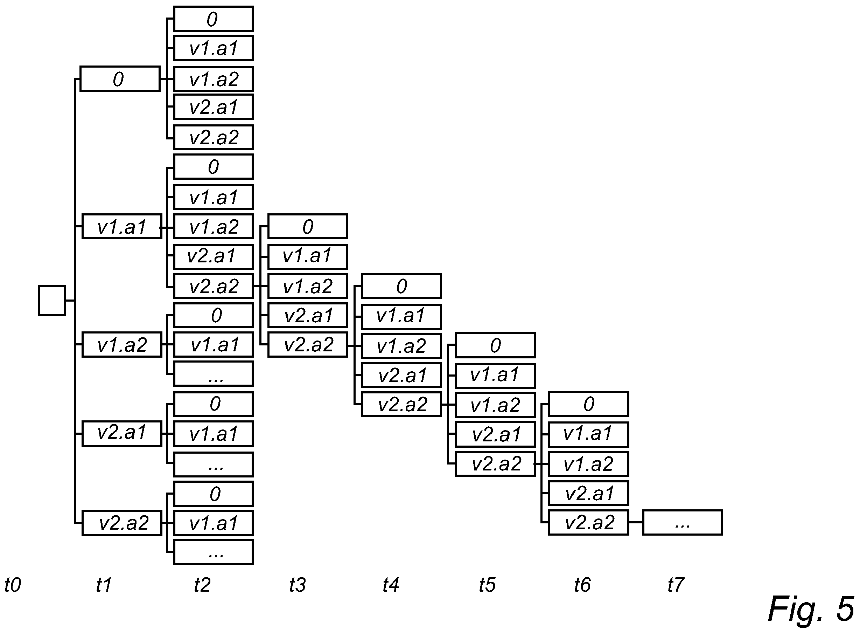

With this setup, the space of possible planning outcomes corresponds to the set of all command sequences of length $d$, where $d$ is the planning horizon (or lookahead horizon). Equivalently, if the planning process is represented as a search tree of the type shown in figure 5, the possible planning outcomes are in a one-to-one relationship with the leaves; the corresponding command sequence is the path from the root to this leaf. The search tree covers seven epochs t1, t2, ..., t7. The planning horizon is seven times the duration of an epoch. For each epoch, there are five possibilities: no command is given (0), command a1 is given to vehicle v1 (vi.a1), command a2 is given to vehicle v1 (vi.a2), command a1 is given to vehicle v2 (v2.a1) or command a2 is given to vehicle v2 (v2.a2).

Within the scope of the present disclosure, a multitude of planning algorithms can be used. A straightforward possible planning approach may be to assign a rule-based score to each possible planning outcome (i.e., sequence of commands) and select the most beneficial one. The score may be assigned on the basis of simulating the movement of the vehicles which will result from applying that sequence of commands, e.g., to find their positions at the planning horizon. Other approaches may include heuristics to accelerate the search for an acceptable solution. The heuristics may help identify on an early stage such sequences of commands that are less promising and exclude them from a full evaluation. As mentioned above, an example heuristic is to remove vehicles from potentially blocking positions without delay. Machine-learning techniques may be useful. The machine-learning agent (e.g., an artificial neural network) may be trained to propose the most suitable action (i.e., command sequence) for a given state. Regardless of the choice of planning algorithm, the computational effort generally has a high sensitivity to a change in the number of leaves, which means that the necessary resource allocation varies significantly with the search depth considered in each execution.

It is initially assumed that all five possibilities remain available in the next epoch, whichever possibility is chosen in the present epoch, so that the branching factor (or fan-out) of the search tree is 5 everywhere. An outcome of the planning is a 7-element sequence, like (v1.a1, v2.a2, v2.a2, v2.a2, v2.a2, v2.a2, 0), as suggested in figure 5, or (0, 0, 0, 0, 0, 0, 0). Due to the limited drawing space in figure 5, repeating parts of the search tree are represented by elliptic dots (...) or altogether omitted. The leaves of the tree are the tree nodes at the last epoch t7. Their number is $5^7 = 78125$.

The use of a greater planning horizon usually promotes overall more economical vehicle movements, as it helps avoid blocking or near-blocking states, or other consequences of overly 'short-sighted' planning. This however comes at a computational cost: The number of leaves grows exponentially with the planning depth d. When a further vehicle v3 is added, the number of leaves grows as a power of the planning depth d = 7. If the addition implies that one more command v3.a1 can be given at each epoch, there will be $6^d$ leaves; if the addition implies that two more commands v3.a1, v3.a2 per epoch are available, there will be $7^d$ leaves, and so forth. There is clearly a dependence on the number of commands as well. In a hypothetic case where each one of $N$ vehicles is controllable by exactly one command each (e.g., drive/wait), the search tree has $(N + 1)^d$ leaves. In the general case, if the $n^{th}$ vehicle accepts $k_n \geq 1$ commands, the number of leaves for planning depth $d$ is

$$\left(1 + \sum_{n=1}^{N} k_n\right)^d.$$

As announced, the search space size is proportional to the $d^{th}$ power of a number which grows at least linearly with the number $N$ of vehicles. For example, if $d = 10$, $N = 2$ and $k_1 = k_2 = 2$, then the search space size (number of leaves) is about $10^7$, which may or may be computationally tractable, depending on the available processing power. If instead $d = 10$, $N = 10$ and $k_1 = k_2$

$= \cdots = k_{10} = 2$, the search space size of the order of $10^{13}$, which would be extremely costly to process. The search space size may be independent of the number of planning nodes.

It is now assumed, instead, that some epochs allow less than all five possibilities. The present invention can achieve a potential efficiency gain in cases where the branching factor drops below the theoretical maximum for some epochs. Such drops may result when it is not possible or meaningful to control some of the vehicles. For example, the initial node occupancies may render some of the commands infeasible, e.g., since one vehicle is temporarily not mobile. Further, it may turn out that some of the commands that are a priori available in one epoch may in fact evolve the vehicle system into a deadlock pattern, and that command is to be treated as infeasible too. For these and similar reasons, the branching factor may vary across different epochs and it may be less than 5 in some epochs. As a result, and notably since the epochs with a branching factor below 5 may restrain the exponential growth of the tree significantly, the number of leaves in a seven-epoch tree may be much below 78125. The number of leaves can be computed as

$$\prod_{\ell=1}^{d} b_\ell$$

In figure 5, the search depth $d = 7$ and the local branching factors $b_\ell \leq 5$.

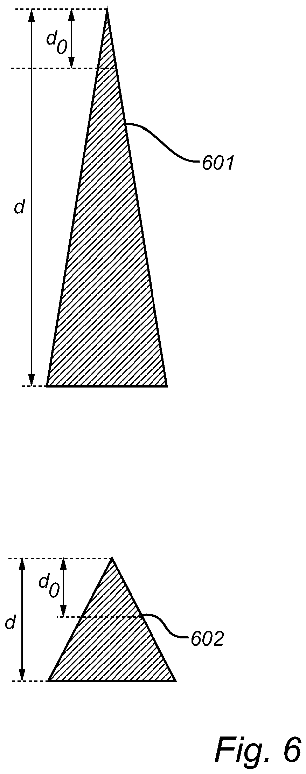

To illustrate, figure 6 shows outlines of two example search trees 601, 602. The horizontal length scale is logarithmic, in the sense that the local width of the tree corresponds to the logarithm of the number of states in that epoch, whereas the vertical length scale is linear with respect to the number of epochs. The first search tree 601 grows weakly: the feasible commands are fewer than the theoretical maximum branching factor in at least some epochs. The second search tree 602 grows with the theoretical maximum branching factor in every epoch, and therefore reaches a number of leaves equal to that of the first search tree 601 already for a smaller search depth $d$. The inventor has realized that the branching factor has a limited variation with respect to successive epochs. This is why the mean branching factor of the search tree can be estimated on the basis of the mean number of feasible motion commands for a neighborhood of the initial node occupancies. The neighborhood may comprise the first $d_0$ epochs of the actual search tree. Although the predefined search depth $d_0$ may be significantly less than typical values of the search depth $d$, it may provide enough guidance towards the true mean branching factor, as an indicator of whether the search tree has weak or strong growth.

The usefulness of the invention is confirmed by numerical data for two example waypoint topologies.

Example 1: First waypoint topology (not shown); eight deployed vehicles; each vehicle is controllable by the commands "drive" and "wait". Initially, all vehicles are freely movable; none occupies an absorption node. For a search depth of 3 epochs, the search tree has 158 leaves.

Example 2: First waypoint topology; eight deployed vehicles; each vehicle is controllable by the commands "drive" and "wait". Initially, one of the vehicles occupies an absorption node (unloading). For a search depth (planning horizon) of 3 epochs, the search tree has 69 leaves.

A comparison of the above data sets suggests that a processor which solves the planning problem of example 1 in acceptable time runs with excess capacity when handling example 2. The excess capacity could be spent on increasing the search depth by one or more epochs. With reference to figure 6, examples 1 and 2 may be likened to the respective outlined search trees 602 and 601, where the weaker growing tree 601 allows a greater planning depth $d$ without exceeding the tractable number of leaves.

Example 3: Second waypoint topology; two deployed vehicles; each vehicle is controllable by the commands "drive" and "wait". Initially, all vehicles are freely movable. For a search depth of 5 epochs, the search tree has 262 leaves.

Example 4: Second waypoint topology; two deployed vehicles; each vehicle is controllable by the commands "drive" and "wait". Initially, one of the vehicles is in a single-lane two-way section of the road network, where the command "wait" is blocked according to preprogrammed control logic. For a search depth of 5 epochs, the search tree has 63 leaves.

Again, it appears that the available computational resources would suffice even if the search depth in example 4 was increased to 6, 7 or more. This may promote more prudent vehicle control and, as a consequence, smoother and more economical operation.

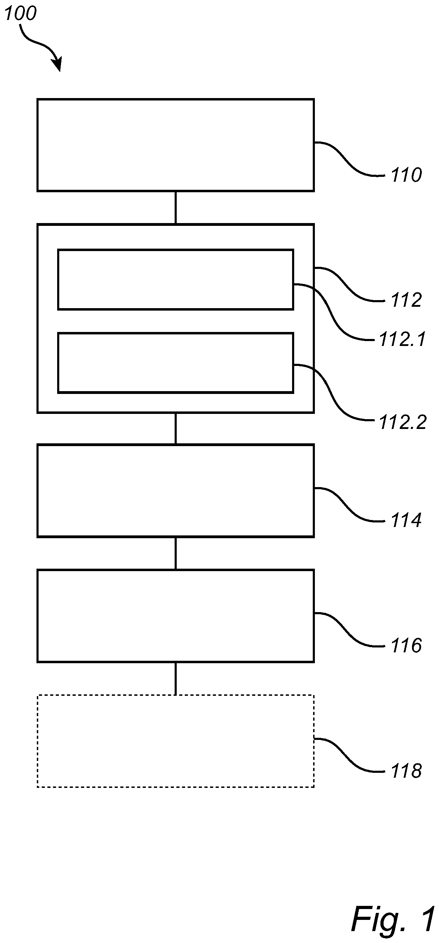

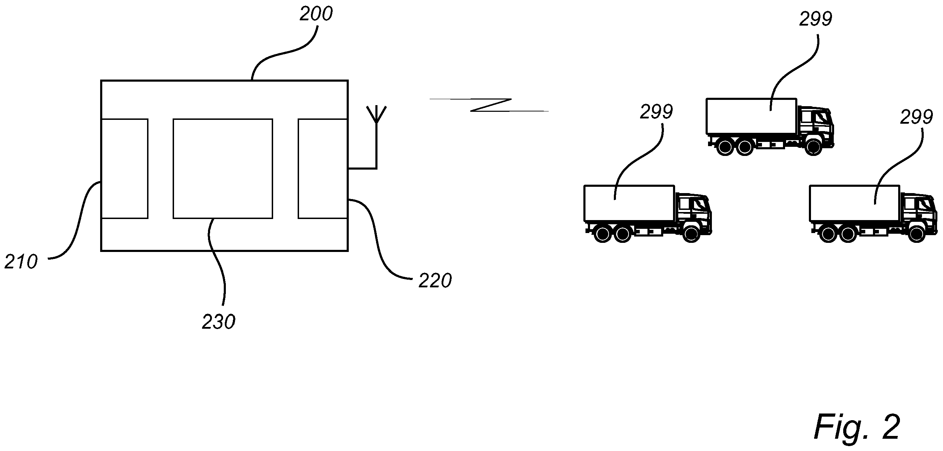

With reference now to figure 1, a traffic planning method 100 according to one embodiment will be described. The method 100 may be implemented by a general-purpose programmable computer, such as the device 200 shown in figure 2 to be described below.

In a first step 110 of the method 100, the initial node occupancies of the vehicles are obtained. The node occupancies may be represented as a data structure associating each vehicle with a planning node, like the $0$ function above.

In a second step 112, a mean number of feasible motion commands in a neighborhood of the initial node occupancies is determined. Reference is made to the above definition of feasible motion commands, and it is recalled that this number is equal to the local branching factor. The neighborhood may correspond to a smaller search tree with the initial node occupancies as its root and having a predefined search depth $d_0$, wherein the predefined search depth $d_0$ is typically significantly less than typical values of the search depth $d$. The second step 112 may be described metaphorically as 'scouting' the branching factor, i.e., generating the first $d_0$ levels of the search tree, sampling the branching factor for these levels, and using this number to approximate $\overline{b}$, the mean branching factor for the full tree. The approximation is well justified as it has been found that, in traffic-planning applications, the branching factor has a limited variation with respect to successive epochs.

The mean branching factor in the neighborhood may be computed as the arithmetic mean of the local branching factors:

$$\overline{b} \approx \frac{b_1 + b_2 + \cdots + b_{d_0}}{d_0},$$

where $b_\ell$ is the branching factor on the $\ell^{\text{th}}$ level of the search tree. Alternatively, the number of leaves $L$ at the $d_0^{\text{th}}$ level is determined and the mean value branching factor is computed as the $d_0^{\text{th}}$ root, i.e., $\overline{b} \approx L^{1/d0}$.

In specific implementations, the second step 112 may include a substep of processing 112.1 the initial node occupancies to identify vehicles which are temporarily non-movable. Alternatively or additionally, the second step 112 includes a substep of comparing 112.2 the initial node occupancies with a set of deadlock patterns, to thereby assess which motion commands cannot be used.

In a third step 114 of the method 100, a search depth $d$ which makes optimal use of a predefined computational budget is computed on the basis of the approximate mean branching factor $\overline{b}$, i.e., the mean number of feasible motion commands in the neighborhood of the initial node occupancies. Because the computational budget is expressed as a maximum number of leaves in a search tree, $L_{\max}$, one may set $d$ to the greatest integer satisfying $\overline{b}^d \leq L_{\max}$, or $d = \left\lfloor \log L_{\max} / \log \overline{b} \right\rfloor$.

In a fourth step 116 of the method 100, a suitable sequence of motion commands is determined by means of an optimization process which considers a search depth of $d$. The optimization process may include executing a planning algorithm of any of the types discussed above. It is noted that the optimization process may be allowed to execute until a converge criterion is met, until an optimality criterion is fulfilled and/or until a predefined time has elapsed. Actually reaching optimality is no necessary condition under the present invention.

In an optional fifth step 118, the thus determined sequence of motion commands is fed to said plurality of vehicles for execution.

Figure 2 shows, in accordance with a further embodiment, a device 200 for controlling a plurality of vehicles 299 sharing a set of planning nodes. The device 200 has a first interface 210 configured to receive initial node occupancies of the vehicles 299. Optionally, it may further receive, for each vehicle, information representing a set of predefined commands v1.a1, vi.a2, v2.a1, v2.a2, which can be fed to the respective vehicles, and/or a mission (utility task) to be carried out may by the vehicles 299. The initial node occupancies may be obtained from a traffic control entity communicating with the vehicles 299, from sensors detecting the positions of the vehicles 299, or from a reply to a self-positioning query issued to the vehicles 299. The optional information may be entered into the first interface 210 by an operator or provided as configuration data once it is known which vehicles 299 will form the fleet.

The device 200 further has a second interface 220 configured to feed commands selected from said predefined commands to said plurality of vehicles, as well as processing circuitry 230 configured to perform the method 100 described above. Figure 2 shows direct wireless links from the second interface 220 to the vehicles 299. In other embodiments, as explained above, the second interface 220 may instead feed sequences of the predefined commands to the traffic control entity, which takes care of the delivery of the commands to the vehicles 299.

Figure 4 shows a truck 400, a bus 402 and a construction equipment vehicle 404. A fleet of vehicles of one or more of these types, whether they are autonomous or conventional, can be controlled in a centralized fashion using the method 100 or the device 200 described above.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1.  A traffic planning method (100) for controlling a plurality of vehicles (v1, v2, v3, v4), wherein each vehicle occupies one node in a shared set of planning nodes (wp1, wp2, wp3, wp4, wp5, wp6, wp7, wp8) representing resources which are shared among the vehicles, and each vehicle is movable to other nodes along predefined edges between pairs of the nodes in accordance with a finite set of motion commands (v1.a1, vi.a2, v2.a1, v2.a2), the method comprising:

    obtaining (110) initial node occupancies of the vehicles; and
    determining (116) a sequence of motion commands by means of an optimization process configured to maximize productivity and/or minimize cost,
    the method **characterized in that** the optimization process considers a search depth (d), which corresponds to an equal number of levels of a search tree, and which is variable and determined by the following preceding steps:

    - from said finite set of motion commands, determining (112) a mean number of feasible motion commands in a neighborhood of the initial node occupancies, wherein the neighborhood of the initial node occupancies corresponds to a predefined search depth ($d_0$); and
    - determining (114) said search depth (d) which makes optimal use of a predefined computational budget, wherein the search depth (d) is calculated by applying the mean number of feasible motion commands as a mean branching factor of the search tree, and the computational budget corresponds to a maximum number of leaves that a search tree may include.

2.  The method of claim 1, wherein the predefined search depth ($d_0$) is significantly less than typical values of the search depth (d).

3.  The method of any of the preceding claims, wherein said determining (112) comprises processing (112.1) the initial node occupancies to identify vehicles which are temporarily non-movable.

4.  The method of any of the preceding claims, wherein said determining (112) includes comparing (112.2) the initial node occupancies with a set of deadlock patterns.

5.  The method of any of the preceding claims, further comprising feeding (118) the sequence of motion commands to said plurality of vehicles.

6.  The method of any of the preceding claims, wherein the vehicles are autonomous vehicles.

7.  The method of any of the preceding claims, wherein the motion commands correspond to tactical decision-making.

8.  A device (200) configured to control a plurality of vehicles (v1, v2, v3, v4), wherein each vehicle occupies one node in a shared set of planning nodes (wp1, wp2, wp3, wp4, wp5, wp6, wp7, wp8) and is movable to other nodes along predefined edges between pairs of the nodes in accordance with a finite set of motion commands (v1.a1, vi.a2, v2.a1, v2.a2), the device comprising:

    a first interface (210) configured to receive initial node occupancies of the vehicles;
    a second interface (220) configured to feed motion commands selected from said finite set to said plurality of vehicles; and
processing circuitry (230) configured to perform
the method of any of the preceding claims.

9. A computer program comprising instructions which,
when the program is executed by a computer, cause
the computer to carry out the method of any of claims
1 to 7.

**Patentansprüche**

1. Verkehrsplanungsverfahren (100) zur Steuerung einer Vielzahl von Fahrzeugen (v1, v2, v3, v4), wobei jedes Fahrzeug einen Knoten in einem gemeinsam genutzten Satz von Planungsknoten (wp1, wp2, wp3, wp4, wp5, wp6, wp7, wp8) belegt, die Ressourcen darstellen, die von den Fahrzeugen gemeinsam genutzt werden, und jedes Fahrzeug entlang vordefinierter Kanten zwischen den Paaren von Knoten in Übereinstimmung mit einem endlichen Satz von Bewegungsbefehlen (v1.a1, v1.a2, v2.a1, v2.a2) zu anderen Knoten bewegbar ist, das Verfahren umfassend:

Erhalten (110) der anfänglichen Knotenbelegungen der Fahrzeuge; und
Bestimmen (116) einer Folge von Bewegungsbefehlen mittels eines Optimierungsprozesses, der konfiguriert ist, um die Produktivität zu maximieren und/oder die Kosten zu minimieren, wobei das Verfahren **dadurch gekennzeichnet ist, dass** der Optimierungsprozess eine Suchtiefe ($d$) berücksichtigt, die einer gleichen Anzahl von Ebenen eines Suchbaums entspricht und die variabel ist und durch die folgenden vorhergehenden Schritte bestimmt wird:

- aus dem endlichen Satz von Bewegungsbefehlen, Bestimmen (112) einer mittleren Anzahl von durchführbaren Bewegungsbefehlen in einer Umgebung der anfänglichen Knotenbelegungen, wobei die Umgebung der anfänglichen Knotenbelegungen einer vordefinierten Suchtiefe ($d_0$) entspricht; und
- Bestimmen (114) der Suchtiefe ($d$), die ein vordefiniertes Rechenbudget optimal nutzt, wobei die Suchtiefe ($d$) berechnet wird, indem die mittlere Anzahl durchführbarer Bewegungsbefehle als mittlerer Verzweigungsfaktor des Suchbaums verwendet wird, und das Rechenbudget einer maximalen Anzahl von Blättern entspricht, die ein Suchbaum enthalten kann.

2. Verfahren nach Anspruch 1, wobei die vordefinierte Suchtiefe ($d_0$) deutlich geringer ist als typische Werte der Suchtiefe ($d$).

3. Verfahren nach einem der vorhergehenden Ansprüche, wobei das Bestimmen (112) die Verarbeitung (112.1) der anfänglichen Knotenbelegungen umfasst, um Fahrzeuge zu identifizieren, die vorübergehend nicht beweglich sind.

4. Verfahren nach einem der vorhergehenden Ansprüche, wobei das Bestimmen (112) das Vergleichen (112.2) der anfänglichen Knotenbelegungen mit einem Satz von Deadlock-Mustern umfasst.

5. Verfahren nach einem der vorhergehenden Ansprüche, das ferner das Zuführen (118) der Abfolge von Bewegungsbefehlen zu der Vielzahl von Fahrzeugen umfasst.

6. Verfahren nach einem der vorhergehenden Ansprüche, wobei das Fahrzeug ein autonomes Fahrzeug ist.

7. Verfahren nach einem der vorhergehenden Ansprüche, wobei die Bewegungsbefehle taktischen Entscheidungen entsprechen.

8. Vorrichtung (200), die konfiguriert ist, um eine Vielzahl von Fahrzeugen (v1, v2, V3, v4) zu steuern, wobei jedes Fahrzeug einen Knoten in einem gemeinsam genutzten Satz von Planungsknoten (wp1, wp2, wp3, wp4, wp5, wp6, wp7, wp8) belegt und entlang vordefinierter Kanten zwischen den Paaren von Knoten in Übereinstimmung mit einem endlichen Satz von Bewegungsbefehlen (v1.a1, v1.a2, v2.a1, v2.a2) zu anderen Knoten bewegbar ist, die Vorrichtung umfassend:

eine erste Schnittstelle (210), die konfiguriert ist, um anfängliche Knotenbelegungen der Fahrzeuge zu empfangen;
eine zweite Schnittstelle (220), die konfiguriert ist, um Bewegungsbefehle, die aus dem endlichen Satz ausgewählt werden, an die Vielzahl von Fahrzeugen weiterzuleiten; und
eine Verarbeitungsschaltung (230), die konfiguriert ist, um das Verfahren nach einem der vorhergehenden Ansprüche durchzuführen.

9. Computerprogramm mit Befehlen, die den Computer veranlassen, das Verfahren nach einem der Ansprüche 1 bis 7 auszuführen, wenn das Programm von einem Computer ausgeführt wird.

**Revendications**

1. Procédé de planification de trafic (100) permettant de commander une pluralité de véhicules (V1, V2, V3, V4), chaque véhicule occupant un nœud dans un ensemble partagé de nœuds de planification (wp1, wp2, wp3, wp4, wp5, wp6, wp7, wp8) représentant des ressources partagées entre les véhicules, et chaque véhicule étant mobile vers d'autres nœuds le long de bords prédéfinis entre des paires de nœuds en fonction d'un ensemble fini de commandes de mouvement (v1.a1, v1.a2, v2.a1, v2.a2), le procédé comprenant :

l'obtention (110) d'occupations des nœuds initiales des véhicules ; et
la détermination (116) d'une séquence de commandes de mouvement au moyen d'un processus d'optimisation configuré pour maximiser la productivité et/ou minimiser les coûts,
le procédé étant **caractérisé en ce que** le processus d'optimisation considère une profondeur de recherche (d), qui correspond à un nombre égal de niveaux d'un arbre de recherche, et qui est variable et déterminée par les étapes précédentes suivantes :

- à partir dudit ensemble fini de commandes de mouvement, la détermination (112) d'un nombre moyen de commandes de mouvement réalisables dans un voisinage des occupations initiales des nœuds, le voisinage des occupations de nœuds initiales correspondant à une profondeur de recherche prédéfinie ($d_0$) ; et
- la détermination (114) de ladite profondeur de recherche (d) qui utilise de manière optimale un budget de calcul prédéfini, la profondeur de recherche (d) étant calculée en appliquant le nombre moyen de commandes de mouvement réalisables comme facteur de branchement moyen de l'arbre de recherche, et le budget de calcul correspondant à un nombre maximum de feuilles qu'un arbre de recherche peut inclure.

2. Procédé selon la revendication 1, dans lequel la profondeur de recherche prédéfinie ($d_0$) est significativement inférieure aux valeurs typiques de la profondeur de recherche (d).

3. Procédé selon l'une quelconque des revendications précédentes, dans lequel ladite détermination (112) comprend le traitement (112.1) des occupations de nœuds initiales pour identifier des véhicules qui sont temporairement immobiles.

4. Procédé selon l'une quelconque des revendications précédentes, dans lequel ladite détermination (112) comprend la comparaison (112.2) des occupations de nœuds initiales avec un ensemble de configurations d'interblocage.

5. Procédé selon l'une quelconque des revendications précédentes, comprenant en outre l'envoi (118) de la séquence de commandes de mouvement à ladite pluralité de véhicules.

6. Procédé selon l'une quelconque des revendications précédentes, dans lequel les véhicules sont des véhicules autonomes.

7. Procédé selon l'une quelconque des revendications précédentes, dans lequel les commandes de mouvement correspondent à une prise de décision tactique.

8. Dispositif (200) configuré pour commander une pluralité de véhicules (V1, V2, V3, V4), chaque véhicule occupant un nœud dans un ensemble partagé de nœuds de planification (wp1, wp2, wp3, wp4, WP5, wp6, wp7, wp8) et pouvant être déplacé vers d'autres bords prédéfinis de nœuds entre les nœuds conformément à un ensemble fini de commandes de mouvement (v1.a1, v1.a2, v2.a1, v2.a2), le dispositif comprenant :

une première interface (210) configurée pour recevoir les occupations initiales des nœuds des véhicules ;
une seconde interface (220) configurée pour transmettre des commandes de mouvement sélectionnées dans ledit ensemble fini à ladite pluralité de véhicules ; et
un circuit de traitement (230) configuré pour exécuter le procédé selon l'une quelconque des revendications précédentes.

9. Programme informatique comprenant des instructions qui, lorsque le programme est exécuté par un ordinateur, amènent l'ordinateur à exécuter le procédé selon l'une quelconque des revendications 1 à 7.

100

110

112

112.1

112.2

114

116

118

*Fig. 1*

Fig. 2

EP 4 095 640 B1

*Fig. 3*

400

402

404

*Fig. 4*

| | | 0 |
| | 0 | v1.a1 |
| | | v1.a2 |
| | | v2.a1 |
| | | v2.a2 |
| | | 0 |
| | | v1.a1 |
| | v1.a1 | v1.a2 | 0 |
| | | v2.a1 | v1.a1 |
| | | v2.a2 | v1.a2 | 0 |
| | | 0 | v2.a1 | v1.a1 |
| | v1.a2 | v1.a1 | v2.a2 | v1.a2 | 0 |
| | | ... | | v2.a1 | v1.a1 |
| | | 0 | | v2.a2 | v1.a2 | 0 |
| | v2.a1 | v1.a1 | | | v2.a1 | v1.a1 |
| | | ... | | | v2.a2 | v1.a2 |
| | | 0 | | | | v2.a1 |
| | v2.a2 | v1.a1 | | | | v2.a2 | ... |
| | | ... | | | | | |

t0   t1   t2   t3   t4   t5   t6   t7

Fig. 5

$d_0$

$d$

601

$d_0$

$d$

602

Fig. 6

# EP 4 095 640 B1

## REFERENCES CITED IN THE DESCRIPTION

### Patent documents cited in the description

- US 20200247611 A1

- WO 2015011661 A2